# EUROPEAN PATENT SPECIFICATION

(11) **EP 1 793 993 B1**
(45) Date of publication and mention of the grant of the patent: **08.08.2012**
(21) Application number: 05796620.2
(22) Date of filing: 15.09.2005
(51) Int. Cl.: B32B 17/06, B32B 27/06, B65G 49/06, C03C 17/32, C03C 17/36, C03C 17/38, C03C 17/42, C09D 5/00, E04G 21/30, E06B 3/663

(54) **METHOD OF MAKING HEAT TREATED COATED GLASS ARTICLE, AND INTERMEDIATE PRODUCT USED IN SAME**
VERFAHREN ZUR HERSTELLUNG EINES WÄRMEBEHANDELTEN BESCHICHTETEN GLASARTIKELS UND DABEI VERWENDETES ZWISCHENPRODUKT
PROCEDE DE FABRICATION D'UN ARTICLE EN VERRE A COUCHE THERMOTRAITE ET PRODUIT INTERMEDIAIRE UTILISE DANS CELUI-CI

(30) Priority: 27.09.2004 US 612949 P; 08.10.2004 US 960289
(43) Date of publication of application: 13.06.2007
(73) Proprietor: Guardian Industries Corp., Auburn Hills, MI 48326-1714 (US)
(72) Inventor: RICHARDSON, Cory, Flat Rock, MI 48134 (US); THOMSEN, Scott, V., South Lyon, MI 48178 (US)
(74) Representative: Hess, Peter K. G.
(86) International application number: PCT/US2005/033242
(87) International publication number: WO 2006/036605

(56) References cited:
- WO-A-01/02496
- FR-A- 2 272 961
- GB-A- 2 145 640
- US-A- 5 107 643
- US-A- 6 124 044
- US-A1- 2002 064 662
- US-B1- 6 491 972

## Description

This invention in certain example instances relates to a method of making a coated glass article, which may be heat treated. In certain example instances, a temporary protective polymer based layer is formed on a coated glass substrate following heat treatment thereof (e.g., thermal tempering of the coated article), in order to enhance the mechanical and environmental durability of the heat treated thin film coating following the heat treatment process (e.g., during shipping, unloading, robotic handling and/or human handling of the heat treated coated article). The protective polymer based layer may be removed prior to, for example, the coated article being loaded into the insulating and/or laminating washer at a fabricator (e.g., IG window unit fabricator), and/or the protective polymer based layer may be removed prior to glass bending, tempering, and/or laminating. Typically, the temporary protective layer is easily removed by peeling it off.

### BACKGROUND OF THE INVENTION

It is known in the art to use coated articles in the context of window units such as insulating glass (IG) window units. For example, see U.S. Patent No. 6,632,491, the disclosure of which is hereby incorporated herein by reference. In the '491 Patent for example, a solar management coating (e.g., low-E coating) is provided on the inner surface of one of the glass substrates of an IG window unit so as to protect a building interior against infrared (IR) radiation and the heat generated thereby. Coated glass substrates of IG units often have to be heat treated (e.g., tempered), prior to IG unit assembly for example, to meet certain code requirements.

However, following heat treatment (e.g., thermal tempering and/or heat bending), the heat treated coated glass substrate is often subjected to shipping, unloading, storage on a pallet or the like, robotic handling and/or human handling. One or more of these often tends to damage the heat treated coated glass substrate (e.g., via scratching, corrosion, and/or the like) before it can be coupled to another substrate to form an IG window unit, laminated window, or the like. Yields are reduced due to such damage which often occurs between heat treatment and coupling to another substrate.

For example, coated sheets are often scratched due to one or more of:
(a) rubbing up against other sheets or the like during shipment, unloading and/or storage; (b) pliers used by glass handlers; (c) abrasion caused by gloves worn by glass handlers; and/or (d) other types of rubbing/abrasion. Additionally, corrosion is also a significant cause of damage and is often caused by high humidity conditions, acid rain, and/or other materials which tend to collect on the coated articles during transport, storage and/or handling.

In view of the above, it can be seen that there exists a need in the art to better protect heat treated coated glass sheets in the processing stages following heat treatment and before coupling to another substrate. In particular, increased protection against mechanical abrasion and environmental damage is needed. Over the years, numerous attempts have been made in this regard.

The dusting of coated sheets with Lucor powder separator is often carried out in an attempt to better protect coated glass sheets in processing stages prior to heat treatment. Unfortunately, Lucor powder provides no protection against corrosion damage, and also is not particularly effective in protecting against scratch damage due to the use of pliers, brushes, gloves and the like.

Encapsulating of racks during shipment has also been tried. However, encapsulating racks is labor intensive and has proven only partially effective during shipment.

U.S. Patent No. 6,682,773 to Medwick discloses a technique where a water-soluble temporary protective layer is applied to a coated glass sheet via a liquid solution. In particular, the protective layer is the reaction product of an aqueous coating composition containing a polyvinyl alcohol polymer which is then cured and may thereafter be removed by washing in water. Unfortunately, the technique of the '773 Patent is highly undesirable in that: (a) the coating is applied in liquid form and thus has to be cured using a sophisticated heat drying process which takes up valuable time and space: (b) the coating is typically water soluble and is removed by washing thereby leaving the coated sheet exposed to potential damage upon contact with water; and/or (c) the protective coating of the '773 Patent is applied and intentionally removed either prior to or during tempering and thus provides no protection during the period after heat treatment when the coated article is subjected to damage/corrosion. Thus, it can be seen that the technique of the '773 Patent is highly undesirable.

U.S. Patent No. 4,710,26 discloses a protective polymeric layer on a coated sheet. However, the isocyanate used in the '426 system prevents the protective polymeric layer from being practically removed in a reasonable manner.

EP 1 380 553 also discloses a temporary protective coating on a coated article. However, like the '773 Patent, the protective coating of EP 1 380 426 bums off during heat treatment and thus provides no protection during the period after heat treatment when the coated article is subjected to damage/corrosion.

In view of the above, it can be seen that there exists a need in the art to better protect coated glass sheets in the processing stages following heat treatment (e.g., thermal tempering and/or heat bending), in particular between heat treatment and coupling of the coated article to another substrate. The protective layer(s) can be easily removed in a processing step prior to coupling the heat treated coated substrate to another substrate. In particular, increased protection against mechanical abrasion and environmental damage is needed between heat treatment and coupling to another substrate in order to improve yields and reduce the likelihood of damage.

### BRIEF SUMMARY OF EXAMPLE EMBODIMENTS OF THE INVENTION

In certain embodiments of this invention, a temporary protective film is provided on a glass substrate that is coated with a multi-layer low-E coating. The temporary protective film includes one or more layers and is located on the glass substrate over at least the low-E coating.

In certain example embodiments, the temporary protective film is designed such that it can be applied over a low-E coating in an efficient manner without the need for any sort of lengthy curing procedure. In this regard, the temporary protective film is preferably applied in solid form (i.e., as opposed to liquid form) so that no significant curing is needed. Moreover, in certain example embodiments of this invention, the temporary protective film is designed such that it can be applied following heat treatment and be easily removed by simply peeling it off prior coupling the coated substrate to another substrate to form an IG window unit, laminated window, or the like. In certain example embodiments, the temporary protective film is designed such that it is not water soluble so that it remains on and protects the low-E coated glass substrate even upon exposure to water and other environmental elements involving humidity.

In certain example embodiments of this invention, there is provided a method of making an insulating glass (IG) window unit, the method comprising: sputtering a multi-layered low-E coating onto a glass substrate, wherein the low-E coating comprises at least one infrared (IR) reflecting layer comprising silver sandwiched between at least first and second dielectric layers; thermally tempering the glass substrate with the low-E coating thereon; after said tempering, adhering a flexible protective sheet or film in non-liquid form to a top surface the low-E coating, without or without an adhesive layer, to form a protected coated article; peeling the protective sheet or film off of the low-E coating to form an unprotected coated article; and after peeling the protective sheet or film off of the low-E coating, coupling the tempered coated article including the glass substrate and low-E coating to another substrate to form an IG window unit.

In other example embodiments of this invention, there is provided a method of making a window unit, the method comprising: forming a multi-layer coating on a glass substrate; heat treating the glass substrate with the coating thereon; after said heat treating, adhering a flexible protective sheet in non-liquid form to a top surface the coating, without or without an adhesive layer, to form a protected coated article; peeling the protective sheet off of the coating to form an unprotected coated article; and after peeling the protective sheet off of the coating, coupling the heat treated coated article including the glass substrate and coating to another substrate to form a window unit.

### BRIEF DESCRIPTION OF THE DRAWINGS

FIGURE 1 is a cross sectional view of a coated article according to an example embodiment of this invention.

FIGURE 2 is a flowchart illustrating certain example steps performed in an example embodiment of this invention.

FIGURE 3 is a cross section view of an IG window unit coated article according to an example embodiment of this invention.

FIGURE 4 is a cross sectional view of a coated article according to an example embodiment of this invention.

FIGURE 5 is a photograph illustrating a plurality of coated articles, each having been partially covered with a protective coating according to an example embodiment of this invention (compare portions in Fig. 5 which had been covered, vs. portions which had not been covered, during exposure to temperature/humidity).

FIGURE 6 is a graph illustrating temperature and humidity conditions used in exposing the coated articles of Fig. 5, during a controlled chamber portion of the exposure.

FIGURE 7 is a graph illustrating temperature and humidity conditions used in exposing the coated articles of Fig. 5, during the lab and warehouse portion of the exposure.

FIGURE 8 is four photographs comparing heat treated coated article portions that were covered with the protective layer during exposure, vs. heat treated coated article portions not covered with the protective layer during exposure (note: the temporary protective film was removed before the Fig. 8 photos were taken).

### DETAILED DESCRIPTION OF EXAMPLE EMBODIMENTS OF THE INVENTION

A temporary protective film, having one or more layers, is provided on a glass substrate that is coated with a multi-layer low-E coating in certain embodiments of this invention. The temporary protective film is typically provided on the substrate over a multi-layer low-E coating, where the low-E coating typically includes at least one infrared (IR) reflecting layer of a material comprising silver or the like. In certain example instances, the IR reflecting layer(s) may be sandwiched between at least a pair of dielectric layers.

In certain example embodiments, the temporary protective film or coating is designed such that it can be applied over a low-E coating in an efficient manner without the need for any sort of lengthy curing procedure (e.g., without the need for convective air drying, radiant heat drying, convective heat drying, heat drying, vacuum drying, and/or radiation curing such as UV, IR or RF curing). In this regard, the temporary protective coating is preferably applied in solid sheet and/or tape form (i.e., as opposed to liquid form) so that no true curing is needed. For example, the temporary protective coating can be easily applied via lamination or the like in an efficient and reasonable manner.

In certain example embodiments of this invention, the temporary protective coating is applied following heat treatment (e.g., thermal tempering and/or heat bending), and remains on the heat treated coated article until it is removed (e.g., by peeling it off) before the heat treated coated article is coupled to another substrate to form an IG window unit, laminated windshield, or the like. The temporary protective coating may be peeled off by hand (by an operator), or alternatively may be peeled off via a robot in certain other embodiments of this invention. Thus, certain example embodiments of this invention allow fabricators to more aggressively handle and/or process coated glass sheets after heat treatment and before coupling to another substrate without running a significant risk of damage. This permits yields to be increased, and costs cut.

It has been found that the use of the protective layer discussed herein allows of yields to be improved by at least 20%, and also allows significant post-HT defects to be reduced by at least 20%, more preferably by at least 40% (e.g., compared to a situation where the temporary protective coating is not used after heat treatment).

In certain example embodiments, the temporary protective coating is not water soluble so that it remains on and protects the low-E coated glass substrate during post-HT shipping, storage, unloading, handling, and/or handling, before the heat treated coated article is coupled to another substrate. Thus, the coated sheet is not as susceptible to damage (e.g., scratching and/or corrosion) during such times.

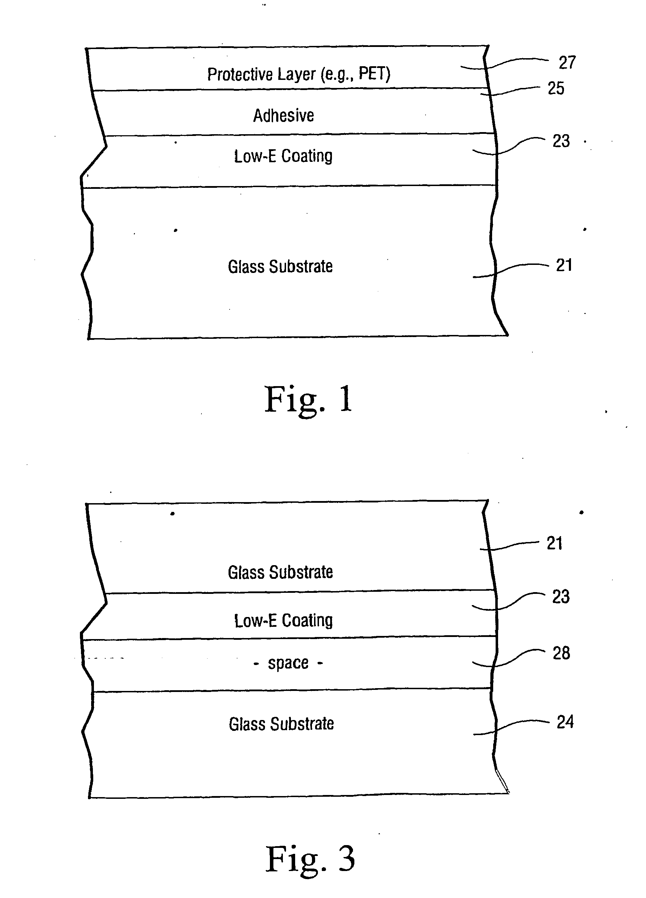

Fig. 1 is a cross sectional view of an intermediate-stage coated article, following heat treatment, according to an example embodiment of this invention. The coated article of Fig. 1 is referred to as an "intermediate-stage" coated article because it typically exists during only a particular stage of the manufacturing process after heat treatment but before the heat treated coated article is coupled to another glass substrate to form an IG unit, laminated window, or the like. As shown in Fig. 1, the coated article includes a glass substrate 21 which supports a low-E coating 23. Provided on the substrate 21 over the low-E coating is a protective layer(s) 27 that is optionally adhered to the low-E coating via adhesive layer 25.

Low-E coating 23 may be any suitable type of low-E coating in different embodiments of this invention. For example, and without limitation, any of the coatings in any of the following U.S. Patents may be used as the coating 23: 6,461,731; 6,447,891; 6,602,608; 6,576,349; 6,514,620; 6,524,714; 5,688,585; 5,563,734; 5,229,194; 4,413,877 and 3,682,528, all of which are hereby incorporated herein by reference. In certain example embodiments, the top layer of the low-E coating is of or comprises silicon nitride which may or may not be doped with a metal such as A1 and/or stainless steel.

Adhesive 25 is a pressure sensitive adhesive (PSA) in certain example embodiments of this invention. In certain instances, the adhesive layer 25 may be of or comprise an acrylic based material. Adhesive 25 provides a low level of adhesion of the protective layer 27 to the top of the low-E coating 23 in certain embodiments thereby permitting the protective layer 27 and most if not all of the adhesive layer 25 to be easily removed by peeling off when desired.

Protective layer 27 may be of or comprise polyethylene in certain example embodiments of this invention. Other suitable materials may also be used in certain instances. In certain example embodiments of this invention, protective layer 27 has a visible transmission of less than 70% (measured regarding all visible wavelengths of light), more preferably less than 60%, and most preferably less than 50% (thus, the optics of the coated article are typically undesirable when the protective layer 27 is thereon). In certain example instances, the protective layer 27 may be blue or otherwise colored. The blue or blue/green coloration of layer 27 is advantageous in that it allows edges of the layer 27 to be clearly seen by operators such as peelers, and also permits handlers to be able to easily determine whether or not the protective layer 27 is still on the coated substrate. This is helpful in preventing coated articles with a layer 27 thereon from being coupled to another glass substrate to form a final product such as an IG unit or the like before layer 27 has been removed by peeling or the like.

In certain example embodiments of this invention, protective layer 27 is from about 1-3 mils thick, more preferably about 2 mils thick, and is in solid flexible sheet form so as to be capable of being stored on a roll or the like before application over the low-E coating. In one example embodiment of this invention, layers 25, 27 may be obtained from Nitto Denko, under the tradename 5057 A5 film tape.

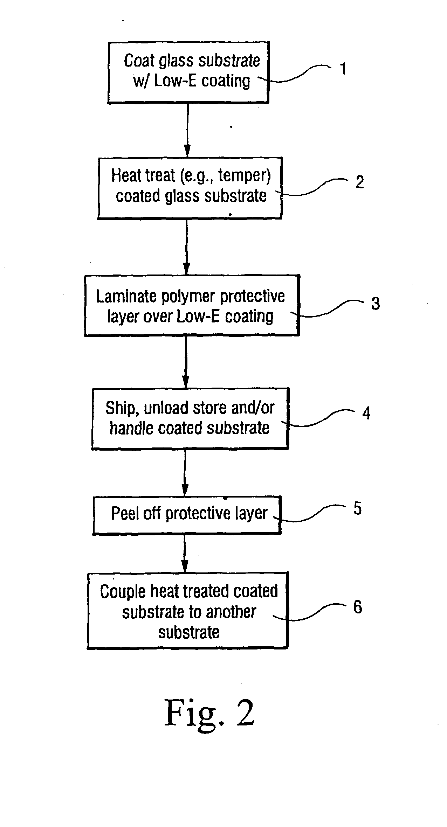

Fig. 2 is a flowchart illustrating certain steps carried out according to an example embodiment of this invention during the manufacture of an IG window unit. With reference to Figs. 1-2, first, a glass substrate 21 is coated with a low-E coating 23 (step 1). Example low-E coatings 23 which may be used are discussed above. The low-E coating is typically a multi-layer coating 23 which includes at least one IR reflecting layer of a material such as silver that is sandwiched between at least a pair of dielectric layers. The coating 23 is typically applied via sputtering or the like. After the coating 23 is applied to the glass substrate 21, the coated glass substrate is heat treated (e.g., thermally tempered and/or heat bent) (step 2). Thermal tempering (an example of heat treatment) typically involves heat treatment of a coated glass substrate using furnace temperature(s) of at least 580 degrees C, more preferably of at least about 600 degrees C and still more preferably of at least 620 degrees C. An example heat treating furnace temperature is from 600 to 700 degrees C. This heat treatment (e.g., tempering and/or bending) can take place for a period of at least 4 minutes, at least 5 minutes, or more in different situations.

Then, following the heat treatment, sheet-like protective layer 27 is adhered to the top of the low-E coating 23 via pressure sensitive adhesive layer 25 (step 3) to form the coated sheet shown in Fig. 1. In certain example embodiments of this invention, protective layer 27 may be stored on a roll (not shown). In such instances, sheet material 27 fed from the roll may be brought into a nip between a biasing roller (not shown) and the coated article with the low-E coating thereon. In the nip, the roller presses the protective sheet layer 27 downward toward the top of the low-E coating thereby adhering the layer 27 to the top of the low-E coating via adhesive layer 25. In certain example embodiments of this invention, the coating is applied at a coated article surface temperature of at least about 100 degrees F, and sometimes from 60 to 120 degrees F, more preferably from about 90 to 120 degrees F, and most preferably from about 90-110 degrees F, and sometime at temperatures above 100 degrees F. In certain example embodiments, the polymer based protective layer 27 is applied to the coated substrate at the exit of the tempering furnace using an automated applicator (e.g., laminator).

After the protective layer 27 has been applied over the low-E coating 23, the coated article may be subjected to one or more of shipping to a fabricator, unloading from a shipment crate or pallet at the fabricator location, storage, and/or handling by an operator and/or robot (step 4). Optionally, in certain example embodiments of this invention, it is possible to coat or dust the coated articles with Lucor™ powder for purposes of protection even after the protective layer 27 has been applied. The Lucor spacer powder may help separate the coated sheets from one another during shipment to an IG unit fabricator and/or during storage with other coated articles.

In certain example embodiments, the protective layer(s) 27 remains on the heat treated coated article from the exit of the furnace line unloading until the coated glass substrate is loaded into the insulating and/or laminating washer at the fabricator (note: the furnace may be located at the glass manufacturer or at the fabricator). The protective layer 27, and optionally adhesive layer 25, is removed by peeling it off just before this washer and thus just before being coupled to another glass or plastic substrate to form an IG window unit, laminated windshield, or the like (step 5). The heat treated coated article composed of substrate 21 and low-E coating 23 in monolithic form, may in certain example embodiments have a visible transmission of at least 40%, more preferably of at least 70%, after removal of the layers 25, 27. After the protective layer 27 has been removed, the coated sheet composed of glass substrate 21 and low-E coating 23 is coupled to another glass or plastic sheet via at least one spacer and/or sealant to form an IG window unit (step 6).

Typically, an IG window unit may include two spaced apart substrates 21, 24 as shown in Fig. 3. Example IG window units are illustrated and described, for example, in U.S. Patent Nos. 5,770,321, 5,800,933, 6,524,714, 6,541,084 and US 2003/0150711. Fig. 3 illustrates that an example IG window unit may include the coated glass substrate including glass substrate 21 and coating 23 coupled to another glass substrate 24 via a spacer(s) (not shown), sealant(s) (not shown) or the like with a gap 28 being defined therebetween. This gap 28 between the substrates in IG unit embodiments may in certain instances be filled with a gas such as argon (Ar), or alternatively may be filled with air. An example IG unit may comprise a pair of spaced apart clear glass substrates each about 4 mm thick, one of which is coated with a coating 23 herein in certain example instances, where the gap between the substrates may be from about 5 to 30 mm, more preferably from about 10 to 20 mm, and most preferably about 16 mm. In certain example IG unit embodiments of this invention, the coating is designed such that the resulting IG unit (e.g., with, for reference purposes, a pair of 4 mm clear glass substrates spaced apart by 16 mm with Ar gas in the gap) has a U-value of no greater than 1.25 W/(m²K), more preferably no greater than 1.20 W/(m²K), even more preferably no greater than 1.15 W/(m²K), and most preferably no greater than 1.10 W/(m²K). The IG window unit may have a visible transmission of from 50-80% in certain example embodiments of this invention, more preferably from 60-75%.

In view of the above, it can be seen that the protective layer 27. and optionally adhesive 25, serve to protect the coated sheet from damage (e.g., scratching, corrosion and the like) during shipping, unloading, cutting, edge seaming and grinding, robotic handling and human handling. An example benefit is significantly higher fabrication yields for the product. While such protective layers have been previously used to protect UV coatings and the like during shipment, they have not been heretofore used to protect low-E coatings during fabrication steps, between heat treatment and coupling to another substrate, as discussed herein.

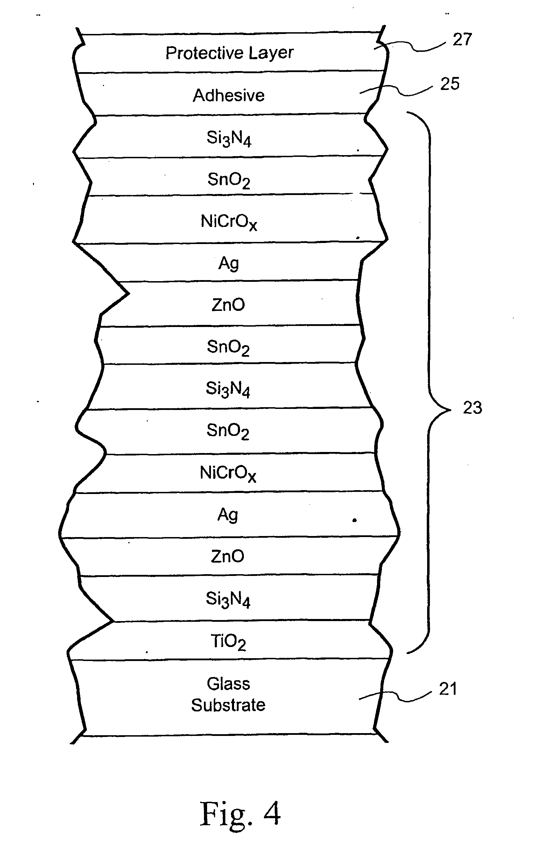

Fig. 4 illustrates protective layer 27 provided on a low-E coating 23 according to an example non-limiting embodiment of this invention. While any type of coating 23 may be used, the coating shown in Fig. 4 is provided for purposes of example, and includes first and second IR reflecting layers of silver with a number of dielectric layers provided therebetween. Other types of coatings (e.g., other low-E coatings, solar control coatings, mirror coatings, etc.) may instead be used between glass substrate 21 and temporary protective layer 27.

### EXAMPLES

For purposes of example only, and without limitation, eight (8) Example coated articles were made and tested. Each example coated article included a glass substrate 21 and low-E coating 23 as shown in Fig. 4. Referring to Fig. 4, a low-E coating 23 was sputtered onto a glass substrate 21. The materials used for the low-E coating 23 are listed below, in order from the glass substrate 21 outwardly; and the approximate thicknesses in the Example are listed in the right-hand column.

| Example Materials/Thicknesses for Low-E Coating 23' | | | |
|---|---|---|---|
| Layer Glass | Preferred Range (Ǻ) | More Preferred (Ǻ) | Example (Ǻ) |
| TiO₂ | 10-150 Å | 20-125 Å | 121 Å |
| SiₓN_{y} | 0-450 Å | 70-300 Å | n/a Å |
| ZnOₓ | 10-300 Ǻ | 40-150 Ǻ | 90 Ǻ |
| Ag | 50-250 Ǻ | 80-120 Ǻ | 92 Ǻ |
| NiCrOₓ | 10-100 Ǻ | 12-40 Ǻ | 37 Ǻ |
| SnO₂ | 0-1,000 Å | 200-700 Å | 597 Å |
| SiₓN_{y} | 0-450 Ǻ | 80-200 Ǻ | n/a Ǻ |
| SnO₂ | 30-250 Å | 50-200 Å | 100 Å |
| ZnOₓ | 10-300 Ǻ | 40-150 Ǻ | 100 Å |
| Ag | 50-250 Ǻ | 80-220 Ǻ | 148 Å |
| NiCrOₓ | 10-100 Ǻ | 20-45 Ǻ | 36 Å |
| SnO₂ | 0-750 Å | 40-200 Å | 100 Å |
| Si₃N₄ | 0-750 Ǻ | 80-3 20 Ǻ | 208 Å |

All examples were heat treated (tempered in this case) in the same manner. After being heat treated, a portion of each heat treated coated article was coated with a protective layer 27 using adhesive 25. The protective layer 27 was of polyethylene, and the adhesive layer 25 was acrylic based in the examples. In particular, NITTO AE-P 5057 A5 tape was used for the protective layer, and is blue in color. Further details, advantages, and characteristics of such an example low-E coating may be found in U.S. Serial No. 10/797,561, the disclosure of which is hereby incorporated herein by reference. It has surprisingly been found that adherence characteristics between the adhesive 25 and silicon nitride (the top layer of the aforesaid low-E coating) are very good.

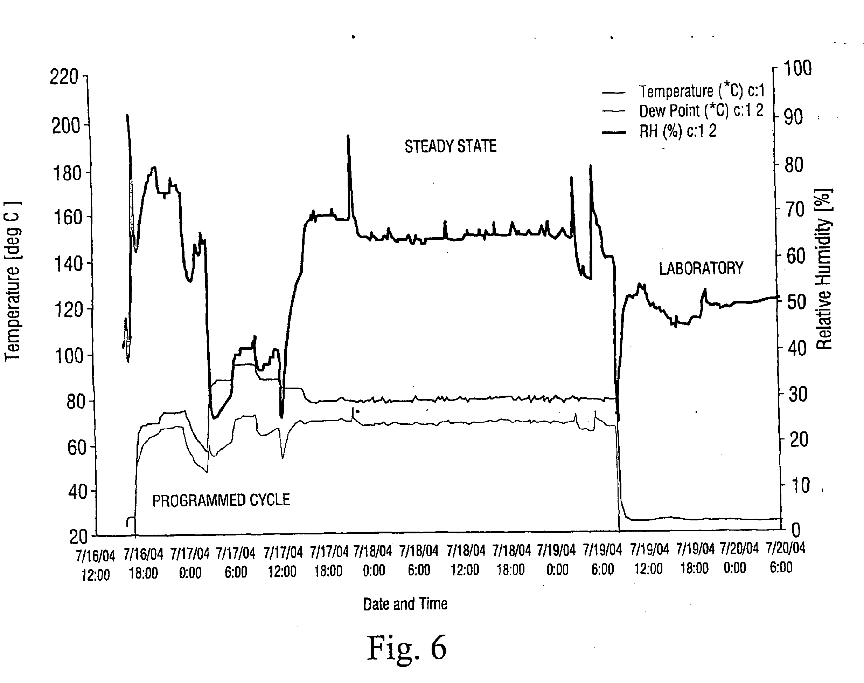

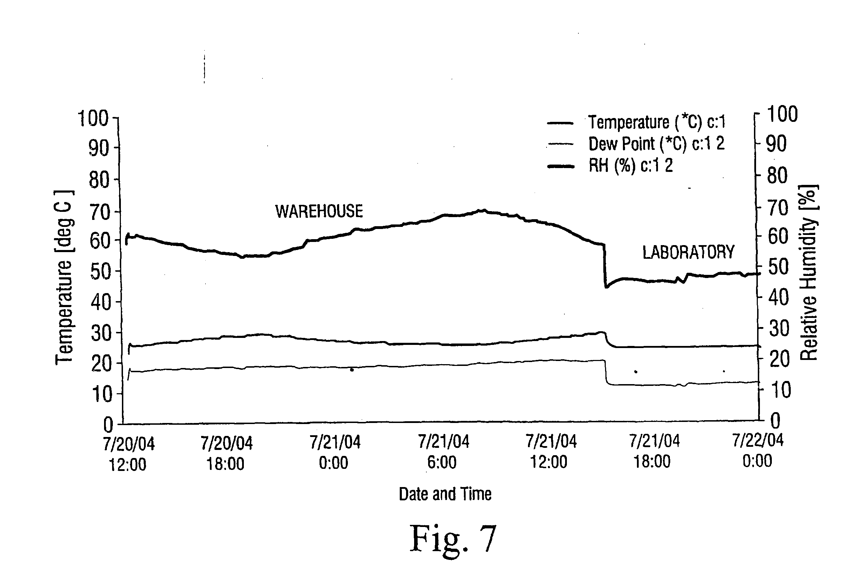

Thus, it will be appreciated that the left hand portion of each example coated article was coated with 25, 27, whereas the right hand portion of each example coated article was not. The heat treated coated articles of the examples (partially covered with 25, 27) were then subject to a test period (about five days) for environmental/durability testing as shown in Figs. 6-7. The test period included a period of conditioning in a lab environment which concluded with application of mechanical treatment by a linear abrader with a borosilicate glass sphere covered with a folded clean room cloth. Fig. 6 illustrates the temperature, dew point, and relative humidity (RH) conditions for the first portion of the test period which the examples were exposed to, and Fig. 7 illustrates the temperature, dew point, and relative humidity (RH) conditions for the second portion of the test period which the examples were exposed to. In particular, Fig. 6 illustrates the condition from July 16 to July 20, whereas Fig. 7 illustrate the conditions from July 20 to July 22.

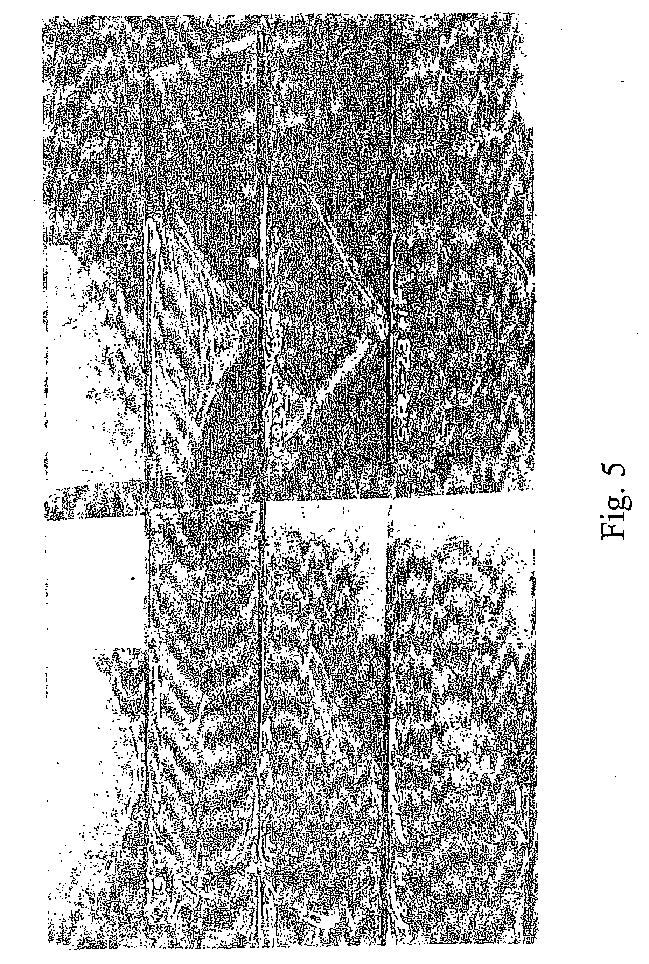

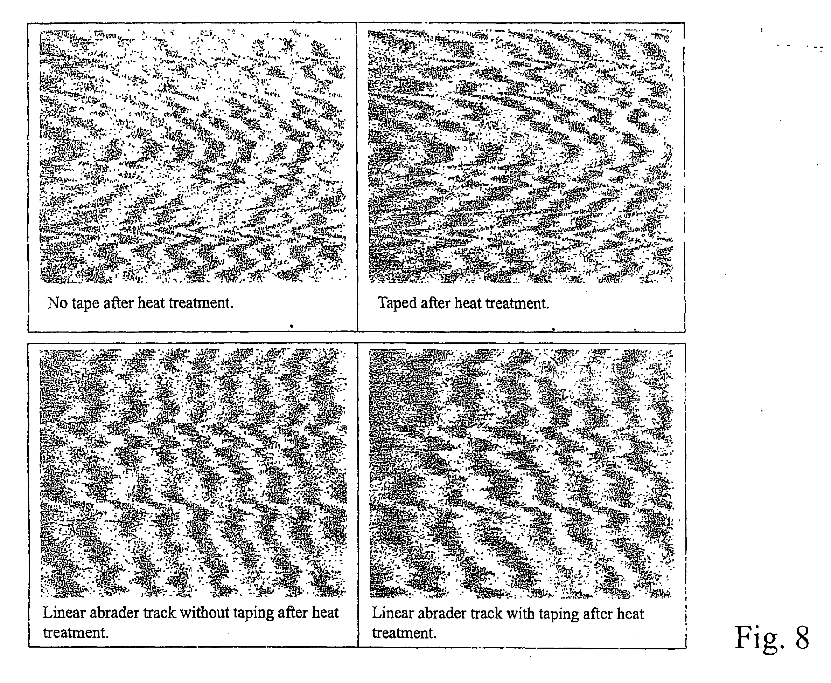

Following the test period, the photos of Figs. 5 and 8 were taken in order to compare the portions of the examples which were covered with 25. 27 to the portions of the examples which were not. It can be seen from Fig. 5 that the protective film 25, 27 clearly protected the heat treated coated article from the scratching which was incurred by the non-coated portion (i.e., the low-E coating easily scratched in the non-coated portion of each example). It can also be seen from Fig. 5 that the portion of the coated article not covered by the protective film 25, 27 suffered corrosion during the test period, while the portion of the coated article covered by the protective film 25, 27 did not.

Fig. 8 includes optical micrographs of heat treated coated articles according to the examples after exposure for one day to the warehouse conditions shown in Fig. 7, about five days after heat treatment. It can be seen that the portions of the coated articles not covered by the protective film 25, 27 suffered significant pinhole formations and corrosion during the test period (left-hand photos of Fig. 8), while the portion of the coated articles covered by the protective film 25, 27 did not (right-hand photos of Fig. 8). Of course, the protective film was removed before the Fig. 8 photos were taken. Moreover, it can be seen by comparing the bottom two photos of Fig. 8 that the protective film also significantly protected the coated article from damage in the linear abrader track test applied to both.

In summary, the application of the temporary protective layer or film has been shown to prevent or significantly slow the corrosion (silvering) process induced by environmental factors. It has also been demonstrated that the temporary protective layer or film successfully prevents or reduces corrosion sites caused by initially invisible mechanical damage such as pinholes and/or scratches -

While the invention has been described in connection with what is presently considered to be the most practical and preferred embodiment, it is to be understood that the invention is not to be limited to the disclosed embodiment, but on the contrary, is intended to cover various modifications and equivalent arrangements included within the scope of the appended claims.

## Claims

1. A method of making a window unit, the method comprising:
forming a multi-layer coating on a glass substrate;
heat treating the glass substrate with the coating thereon;
after said heat treating, adhering a flexible protective sheet in non-liquid form to a top surface the coating, with an adhesive layer, to form a protected coated article;
peeling the protective sheet off of the coating to form an unprotected coated article;
after peeling the protective sheet off of the coating, coupling the heat treated coated article including the glass substrate and coating to another substrate to form a window unit; and
wherein an uppermost layer of the coating comprises silicon nitride, the protective sheet is adhered to the layer comprising silicon nitride via the adhesive layer, and wherein the adhesive layer comprises acrylic.

2. The method of claim 1, wherein the window unit comprises an IG window unit or a laminated vehicle windshield.

3. The method of claim 1, wherein the protective sheet comprises polyethylene.

4. The method of claim 1, wherein the protective sheet has a visible transmission of less than 70%.

5. The method of claim 1, wherein the coated article has a visible transmission of from 50 to 75%.

6. The method of claim 1, wherein the protective sheet is blue and/or green colored.

7. The method of claim 1, wherein the protective sheet is not water soluble.

8. A method of making an insulating glass (IG) window unit, the method comprising:
sputtering a multi-layered low-E coating onto a glass substrate, wherein the low-E coating comprises at least one infrared (IR) reflecting layer comprising silver sandwiched between at least first and second dielectric layers;
thermally tempering the glass substrate with the low-E coating thereon;
after said tempering, adhering a flexible protective sheet in non-liquid form to a top surface the low-E coating, with an adhesive layer, to form a protected coated article;
peeling the protective sheet off of the low-E coating to form an unprotected coated article;
after peeling the protective sheet off of the low-E coating, coupling the tempered coated article including the glass substrate and low-E coating to another substrate to form an IG window unit;
wherein an uppermost layer of the low-E coating comprises silicon nitride, wherein the protective sheet is adhered to the layer comprising silicon nitride via the adhesive layer, and wherein the adhesive layer comprises acrylic.

9. The method of claim 8, wherein the protective sheet comprises polyethylene.

10. The method of claim 8, wherein the protective sheet has a visible transmission of less than 70%.

11. The method of claim 8, wherein the IG window unit has a visible transmission of from 50 to 75%.

12. The method of claim 8, wherein the protective sheet is blue and/or green colored.

13. The method of claim 8, wherein the protective sheet is not water soluble.

## Patentansprüche

1. Ein Verfahren zum Herstellen einer Fenstereinheit, wobei das Verfahren aufweist:
Bilden einer Mehrlagenbeschichtung auf einem Glassubstrat;
Wärmebehandeln des Glassubstrats mit der Beschichtung darauf;
nach dem Wärmebehandeln aufbringen einer flexiblen Schutzschicht in nichtflüssiger Form auf eine obere Oberfläche der Beschichtung mit einer Haftschicht um einen geschützten beschichteten Gegenstand zu bilden;
Abschälen der Schutzschicht von der Beschichtung um einen ungeschützten beschichteten Gegenstand zu bilden;
nach dem Abschälen der Schutzschicht von der Beschichtung Koppeln des wärmebehandelten beschichteten Gegenstands aufweisend das Glassubstrat und die Beschichtung an ein anderes Substrat um eine Fenstereinheit zu bilden; und
wobei eine zuoberste Schicht der Beschichtung Siliziumnitrid aufweist, die Schutzschicht mittels der Haftschicht an der Schicht aufweisend Siliziumnitrid anhaftet, und wobei die Haftschicht Acryl aufweist.

2. Das Verfahren nach Anspruch 1, wobei die Fenstereinheit eine IG-Fenstereinheit oder eine laminierte Autowindschutzscheibe aufweist.

3. Das Verfahren nach Anspruch 1, wobei die Schutzschicht Polyethylen aufweist.

4. Das Verfahren nach Anspruch 1, wobei die Schutzschicht eine Transmission im Sichtbaren von weniger als 70 % hat.

5. Das Verfahren nach Anspruch 1, wobei der beschichtete Gegenstand eine Transmission im Sichtbaren von 50 - 75 % hat.

6. Das Verfahren nach Anspruch 1, wobei die Schutzschicht blau und/oder grün gefärbt ist.

7. Das Verfahren gemäß Anspruch 1, wobei die Schutzschicht nicht wasserlöslich ist.

8. Ein Verfahren zur Herstellung einer Isolierglas-(IG)Fenstereinheit, wobei das Verfahren aufweist:
Sputtern einer mehrlagigen Niedrigemmisivität [Low-E] Beschichtung auf ein Glassubstrat, wobei die Low-E-Beschichtung zumindest eine Infrarot (IR) reflektierende Schicht aufweist, die Silber aufweist und die zwischen zumindest ersten und zweiten dielektrischen Schichten eingelegt ist;
Thermisches Tempern des Glassubstrats mit der Low-E-Beschichtung darauf;
nach dem Tempern, aufbringen einer flexiblen Schutzschicht in nichtflüssiger Form auf eine obere Oberfläche der Low-E-Beschichtung mit einer Haftschicht um einen geschützten beschichteten Gegenstand zu bilden;
Abschälen der Schutzschicht von der Low-E-Beschichtung um einen ungeschützten beschichteten Gegenstand zu bilden; und nach dem Abschälen der Schutzschicht von der Low-E-Beschichtung,
Koppeln des getemperten beschichteten Gegenstands aufweisend das Glassubstrat und die Low-E-Beschichtung an ein anderes Substrat um eine IG-Fenstereinheit zu bilden;
wobei eine zuoberste Schicht der Low-E-Beschichtung Siliziumnitrid aufweist, wobei die Schutzschicht mittels der Haftschicht an der Schicht aufweisend Siliziumnitrid anhaftet und wobei die Haftschicht Acryl aufweist.

9. Das Verfahren nach Anspruch 8, wobei die Schutzschicht Polyethylen aufweist.

10. Das Verfahren nach Anspruch 8, wobei die Schutzschicht eine Transmission im Sichtbaren von zumindest 70 % hat.

11. Das Verfahren nach Anspruch 8, wobei die IG-Fenstereinheit eine Transmission im Sichtbaren von 50 - 75 % hat.

12. Das Verfahren nach Anspruch 8, wobei die Schutzschicht blau und/oder grün gefärbt ist.

13. Das Verfahren nach Anspruch 8, wobei die Schutzschicht nicht wasserlöslich ist.

## Revendications

1. Un procédé de fabrication d'une unité de vitrage, le procédé comprenant :
la formation d'un revêtement multicouche sur un substrat de verre ;
le traitement thermique du substrat de verre avec le revêtement dessus ;
après ledit traitement thermique, l'adhésion d'une feuille protectrice flexible sous forme non liquide sur une surface supérieure du revêtement, avec une couche adhésive, pour former un article revêtu protégé ;
le retrait par pelage de la feuille protectrice d'avec le revêtement pour former un article revêtu non protégé ;
après retrait par pelage de la feuille protectrice d'avec le revêtement, le couplage de l'article revêtu traité thermiquement incluant le substrat de verre et le revêtement avec un autre substrat pour former une unité de vitrage ; et
dans lequel une couche la plus supérieure du revêtement comprend du nitrure de silicium, la feuille protectrice est appliquée par adhésion sur la couche comprenant du nitrure de silicium via la couche adhésive, et dans lequel la couche adhésive comprend un acrylique.

2. Le procédé de la revendication 1, dans lequel l'unité de vitrage comprend une unité de vitrage IG ou un pare-brise feuilleté de véhicule.

3. Le procédé de la revendication 1, dans lequel la feuille protectrice comprend du polyéthylène.

4. Le procédé de la revendication 1, dans lequel la feuille protectrice présente une transmission dans le visible inférieure à 70 %.

5. Le procédé de la revendication 1, dans lequel l'article revêtu présente une transmission dans le visible comprise entre 50 et 75 %.

6. Le procédé de la revendication 1, dans lequel la feuille protectrice est colorée en bleu et/ou en vert.

7. Le procédé de la revendication 1, dans lequel la feuille protectrice n'est pas soluble dans l'eau.

8. Un procédé de fabrication d'une unité de vitrage en verre isolant (IG), le procédé comprenant :
la pulvérisation d'un revêtement à faible émissivité multicouche sur un substrat de verre, le revêtement à faible émissivité comprenant au moins une couche réfléchissant l'infrarouge (IR) comprenant de l'argent prise en sandwich entre au moins une première et une seconde couche diélectrique ;
la trempe thermique du substrat de verre avec le revêtement à faible émissivité dessus ;
après ladite trempe, l'adhésion d'une feuille protectrice flexible sous forme non liquide sur une surface supérieure du revêtement à faible émissivité, avec une couche adhésive, pour former un article revêtu protégé ;
le retrait par pelage de la feuille protectrice d'avec le revêtement à faible émissivité pour former un article revêtu non protégé ;
après retrait par pelage de la feuille protectrice d'avec le revêtement à faible émissivité, le couplage de l'article revêtu trempé comprenant le substrat de verre et le revêtement à faible émissivité avec un autre substrat pour former une unité de vitrage (IG) ;
dans lequel une couche la plus supérieure du revêtement à faible émissivité comprend du nitrure de silicium, dans lequel la feuille protectrice est appliquée par adhésion sur la couche comprenant du nitrure de silicium via la couche adhésive, et dans lequel la couche adhésive comprend de l'acrylique.

9. Le procédé de la revendication 8, dans lequel la feuille protectrice comprend du polyéthylène.

10. Le procédé de la revendication 8, dans lequel la feuille protectrice présente une transmission dans le visible inférieure à 70 %.

11. Le procédé de la revendication 8, dans lequel l'article revêtu présente une transmission dans le visible comprise entre 50 et 75 %.

12. Le procédé de la revendication 8, dans lequel la feuille protectrice est colorée en bleu et/ou en vert.

13. Le procédé de la revendication 8, dans lequel la feuille protectrice n'est pas soluble dans l'eau.
